# EUROPEAN PATENT APPLICATION

(11) **EP 2 518 390 A1**
(43) Date of publication of application: **31.10.2012**
(21) Application number: 11163787.2
(22) Date of filing: 26.04.2011
(51) Int. Cl.: F21S 8/10

(54) **Vehicle Lamp**

(71) Applicant: Quan Mei Technology Co. Ltd, Tainan City (TW)
(72) Inventor: Huang, Kuo-Hsien, Tainan City (TW)
(74) Representative: Midgley, Jonathan Lee

(57) **Abstract**

A vehicle lamp (2) includes a hollow mounting seat (22), a light emitting member (24) disposed in the mounting seat (22), and a light transmitting cover (23). The light transmitting cover (23) includes a main body (231) that is mounted to the mounting seat (22), and a light guide strip (232) that is formed on the main body (231), such that a portion of light emitted by the light emitting member (24) is reflected and refracted by the light guide strip (232) to pass through the light transmitting cover (23). The main body (231) and the light guide strip (232) are molded as one piece.

## Description

The invention relates to a vehicle lamp, more particularly to a vehicle lamp formed with a light guide structure.

A light guide structure of a vehicle lamp is disposed for increasing the brightness of the vehicle lamp and illuminating different patterns of light beams of the vehicle lamp so that the vehicle lamp can be easily recognized. A conventional vehicle lamp generally includes a hollow mounting seat, a lens covering the mounting seat, and a light source disposed in the mounting seat for emitting light through the lens. The light guide member may be mounted on an inner surface of the lens or retained in a groove which is formed on an inner surface of the mounting seat. However, since the abovementioned components of the conventional vehicle lamp are individually manufactured before they are assembled together, the manufacturing cost of the conventional vehicle lamp is relatively high.

Therefore, the object of the present invention is to provide a vehicle lamp having a relatively low manufacturing cost.

Accordingly, a vehicle lamp of the present invention includes a hollow mounting seat, a light emitting member disposed in the mounting seat, and a light transmitting cover. The light transmitting cover includes a main body that is mounted to the mounting seat, and a light guide strip that is formed on the main body, such that a portion of light emitted by the light emitting member is reflected and refracted by the light guide strip to pass through the light transmitting cover. The main body and the light guide strip are molded as one piece.

Other features and advantages of the present invention will become apparent in the following detailed description of the preferred embodiment with reference to the accompanying drawings, of which:
Fig. 1 is an exploded perspective view of a preferred embodiment of a vehicle lamp according to the invention;
Fig. 2 is a schematic front view of the preferred embodiment;
Fig. 3 is a sectional view of the preferred embodiment; and
Fig. 4 is a sectional view of a light transmitting cover of the preferred embodiment.

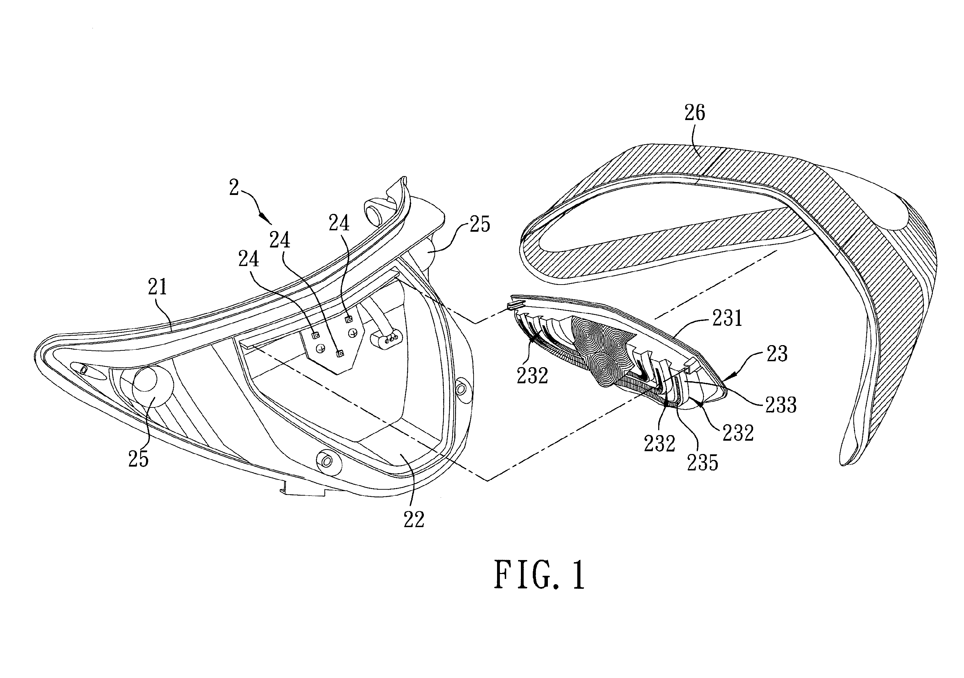

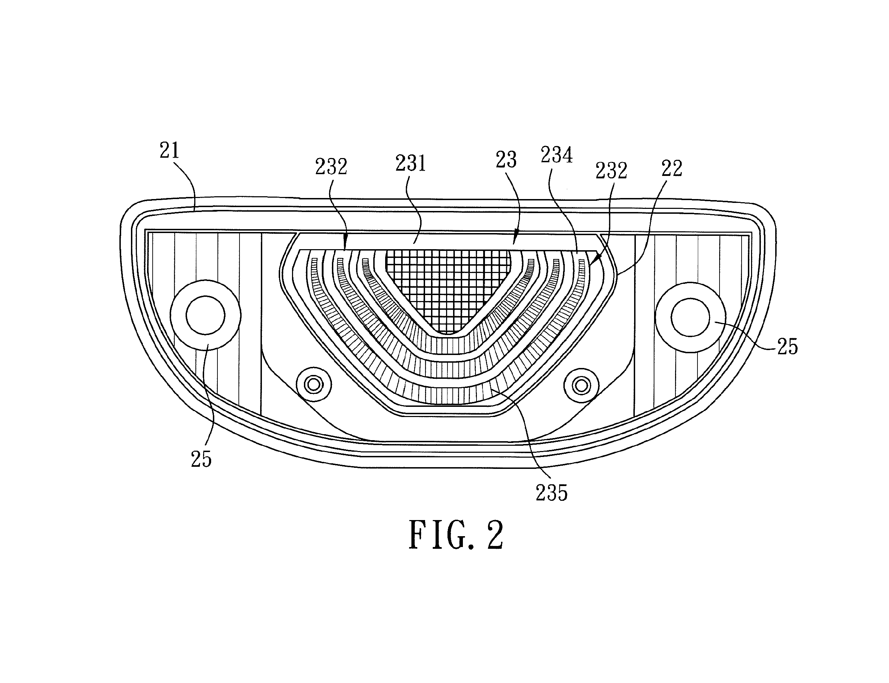

As shown in Figures 1 and 2, the preferred embodiment of a vehicle lamp 2 according to the present invention is adapted for use as a tail light of an automobile (not shown). In this embodiment, the vehicle lamp 2 includes a base seat 21 secured to a tail portion of the automobile, a hollow mounting seat 22 mounted to a middle portion of the base seat 21, a light transmitting cover 23 mounted to and covering the mounting seat 22, three light emitting members 24 disposed in the mounting seat 22, a pair of lateral light emitting components 25 disposed in the base seat 21 and flanking the mounting seat 22, and an outer cover 26 mounted to the base seat 21 and covering the mounting seat 22, the light transmitting cover 23, and the lateral light emitting components 25. The light emitting members 24 may be light emitting diodes, and the lateral light emitting components 25 may be energy saving lamps.

In this embodiment, the light transmitting cover 23 is made of transparent acrylic, and includes a main body 231 that has a peripheral portion mounted securely to the mounting seat 22, and three spaced-apart U-shaped light guide strips 232 that are formed on the main body 231.

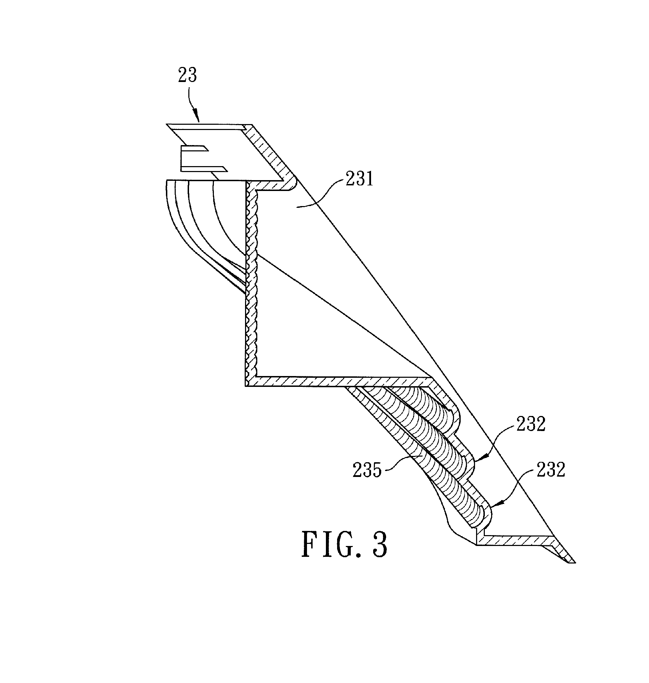

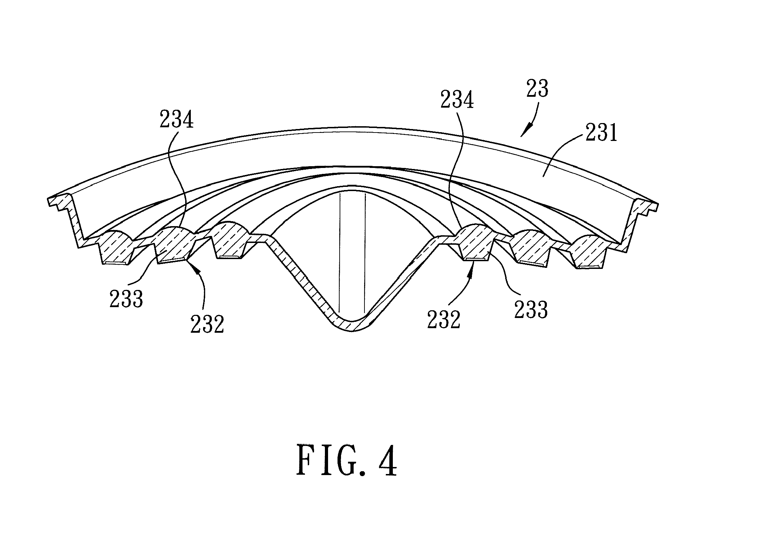

As further shown in Figures 3 and 4, each of the light guide strips 232 has a quadrilateral strip portion 233 projecting inwardly from an inner surface of the main body 231 of the light transmitting cover 23 and having a quadrilateral cross-section, and a convex strip portion 234 projecting outwardly from an outer surface of the main body 231 and having a convex cross-section. In this embodiment, the convex strip portion 234 has a semi-elliptical cross-section. For each light guide strip 232, the quadrilateral strip portion 233, the convex strip portion 234 and the main body 231 are molded as one piece. The quadrilateral strip portion 233 of each light guide strip 232 has a ridged surface 235 distal from the inner surface of the main body 231 of the corresponding light guide strip 232, such that each light guide strip 232 can be clearly recognized when the vehicle lamp 2 is seen from a position in front of the light transmitting cover 23.

In use, light emitted by the light emitting members 24 is transmitted through the light transmitting cover 23 before it finally passes through the outer cover 26, and light emitted by the side light emitting members 25 is transmitted directly through the outer cover 26. Particularly, a portion of the light emitted by the light emitting members 24 is reflected and refracted by the light guide strips 32 so as to enhance the light emission at the light guide strips 32, thereby increasing the brightness of the vehicle lamp 2 and making the vehicle lamp 2 more recognizable. In addition, since the light guide strips 232 and the main body 231 are molded as one piece, the vehicle lamp 2 of this invention has a lower manufacturing cost than that of the abovementioned conventional vehicle lamps.

It should be noted that, in other embodiments of this invention, the light guide strips 232 may be also provided on the outer cover 26 and formed with the outer cover 26 as one piece.

## Claims

1. A vehicle lamp (2) including:
a hollow mounting seat (22);
a light emittingmember (24) disposed in saidmounting seat (22); and
a light transmitting cover (23) including
a main body (231) that is mounted to said mounting seat (22), and
a light guide strip (232) that is formed on said main body (231), such that a portion of light emitted by said light emitting member (24) is reflected and refracted by said light guide strip (32) to pass through said light transmitting cover (23);
**characterized in that** said main body (231) and said light guide strip (232) are molded as one piece.

2. The vehicle lamp (2) as claimed in claim 1, further **characterized in that** said light guide strip (232) has a quadrilateral strip portion (233) projecting inwardly from an inner surface of said main body (231) of said light transmitting cover (23) and having a quadrilateral cross-section.

3. The vehicle lamp (2) as claimed in claim 2, further **characterized in that** said quadrilateral strip portion (233) has a ridged surface (235) distal from said inner surface of saidmainbody (231) ofsaidlighttransmitting cover (23).

4. The vehicle lamp (2) as claimed in any one of claims 2 and 3, further **characterized in that** said light guide strip (232) further has a convex strip portion (234) projecting outwardly from an outer surface of said main body (231) and having a convex cross-section.
